# EUROPÄISCHE PATENTSCHRIFT

(11) **EP 3 767 215 B1**
(45) Veröffentlichungstag und Bekanntmachung des Hinweises auf die Patenterteilung: **02.03.2022**
(21) Anmeldenummer: 20185957.6
(22) Anmeldetag: 15.07.2020
(51) Int. Cl.: F27B 9/12, F27B 9/30, F27B 17/00, F27D 17/00

(54) **ANLAGE ZUM BRENNEN VON KERAMISCHEN WARENROHLINGEN**
SYSTEM FOR FIRING CERAMIC BLANKS
INSTALLATION DE CUISSON DES ÉBAUCHES D'OUVRAGES CÉRAMIQUES

(30) Priorität: 19.07.2019 AT 506542019
(43) Veröffentlichungstag der Anmeldung: 20.01.2021
(73) Patentinhaber: Wienerberger AG, 1100 Wien (AT)
(72) Erfinder: BOOT, Erik, 6717 VW Ede (NL); RATH, Johannes, 2340 Mödling (AT)
(74) Vertreter: Gibler & Poth Patentanwälte KG

(56) Entgegenhaltungen:
- CN-A- 106 766 961
- DE-A1-102011 100 736
- DE-U1-202008 013 487

## Beschreibung

### Die Erfindung betrifft ein Verfahren zum Betreiben einer Anlage gemäß dem Patentanspruch 1.

Es ist bekannt, dass bei der Produktion von keramischen Waren feuchte keramische Warenrohlinge in einem Trockner getrocknet und nachfolgend in einem Ofen gebrannt werden. Die Trocknung ist in der keramischen Industrie einer der energieintensivsten Prozesse und kann bis zu 50 % der in der Herstellung der keramischen Waren benötigten Energie ausmachen.

Heutzutage werden in der Regel offene Konvektionstrockner zum Trocknen der Warenrohlinge verwendet, wobei heiße Luft in den Trockner eingeleitet wird und Feuchtigkeit von den Warenrohlingen aufnimmt. Die eingeleitete Luft wird hierbei abgekühlt und der Umwelt als feuchte erwärmte Abluft zugeführt.

Als Ofen wird in der Regel ein Kammerofen oder ein Tunnelofen verwendet. Bereits getrocknete Warenrohlinge werden dem Ofen zugeführt und in dem Ofen gebrannt. Ein Tunnelofen weist in der Regel eine Vorheizzone zum Aufheizen der getrockneten Warenrohlinge, eine Heizungszone zum Brennen der aufgeheizten Warenrohlinge und eine Abkühlungszone zum Abkühlen der gebrannten Warenrohlinge auf. In der Abkühlungszone wird den heißen Warenrohlingen Abkühlungsluft zugeführt, um diese abzukühlen. Hierbei erhitzt sich die Abkühlungsluft und verlässt den Ofen als heiße Abluft durch einen Auslass bzw. einen Rauchfang.

Die DE 10 2011 100 736 A1 zeigt einen Durchlaufofen mit integrierter thermischer Abgasreinigung, sodass ein Betrieb des Durchlaufofens ohne Verschmutzung des keramischen Brennproduktes gewährleistet ist.

Die CN 106766961 A zeigt eine Sintermaschine mit einem Sinterofen, wobei der Sinterofen in zwei Temperaturbereiche eingeteilt werden kann, wobei ein erster Teilbereich des Sinterofens eine geringere Temperatur als ein zweiter Teilbereich des Sinterofens aufweist. Die Sintermaschine umfasst weiters ein "Organic-Rankine-Cycle (ORC)"-System mit einem Fallfilmverdampfer.

Die DE 20 2008 013 487 U1 zeigt eine Entfeuchtungseinrichtung für Trocknungseinrichtungen für Trockengüter, insbesondere keramische Formlinge.

Nachteilig daran ist, dass einerseits bei dem Trockner Wärmeenergie als feuchte erwärmte Abluft und andererseits bei dem Ofen Wärmeenergie als Abwärme, insbesondere als erhitzte Abkühlungsluft, verloren geht. In Zeiten erhöhter Energiepreise und dem stets steigenden Bedarf an ressourcenschonendem Umgang mit Energie wird es immer wichtiger, Energie, insbesondere in Form von Abwärme, wiederzuverwerten.

Aufgabe der Erfindung ist es daher ein Verfahren der eingangs genannten Art anzugeben, mit welchem die genannten Nachteile vermieden werden können, mit welchem Wärmeenergie aus der Abluft des Trockners und der Abwärme des Ofens wiederverwertet werden kann.

Erfindungsgemäß wird dies durch die Merkmale des Patentanspruches 1 erreicht.

Dadurch ergibt sich der Vorteil, dass Wärmeenergie aus einem Abluftsystem des Trockners mittels einer Absorptionswärmepumpe dem Trockner zugeführt und wiederverwertet werden kann. Weiters ist vorteilhaft, dass Abwärme aus dem Ofen, insbesondere erhitzte Abkühlungsluft, dem Austreiber der Absorptionswärmepumpe zugeführt wird und der Austreiber durch diese Wärme betrieben wird. Somit wird die Wärmeenergie aus dem Abluftsystem des Trockners effizient zurück gewonnen. Weiters ist vorteilhaft, dass die Temperatur und die Feuchtigkeit in dem Trockner unabhängig voneinander gesteuert werden kann, wodurch eine bessere Regelung der Trocknung der Warenrohlinge ermöglicht und die Effizienz des Verfahrens weiter gesteigert wird. Durch die Wiederverwertung der Wärmeenergie aus dem Abluftsystem und der Abwärme aus dem Ofen wird der Brennstoffbedarf zum Aufheizen des Trockners stark reduziert, woraus eine geringere CO₂-Emission der Anlage resultiert und die Anlage somit umweltfreundlicher ist.

Die Erfindung betrifft weiters eine Anlage gemäß dem Oberbegriff des Patentanspruches 10.

Die Erfindung hat daher weiters die Aufgabe eine Anlage der eingangs genannten Art anzugeben, mit welcher die genannten Nachteile vermieden werden können, mit welcher Wärmeenergie aus der Abluft des Trockners und der Abwärme des Ofens wiederverwertet werden kann.

Erfindungsgemäß wird dies durch die Merkmale des Patentanspruches 10 erreicht.

Die Vorteile der Anlage entsprechen den Vorteilen des oben genannten Verfahrens.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Falls der Verdampferkreislauf einen in dem Abluftsystem angeordneten Direktkontaktwärmetauscher umfasst, ergibt sich der Vorteil, dass Arbeitsmittel, insbesondere Wasser, aus dem Abluftsystem des Trockners, insbesondere aus der feuchten Abluft des Trockners, wiederverwertet wird, wodurch der Wasserverbrauch sinkt. Weiters wird der feuchten Abluft Kondensationswärme entzogen werden, welche Wärmeenergie mittels der Absorptionswärmepumpe wiederverwertet werden kann.

Die Erfindung wird unter Bezugnahme auf die beigeschlossene Zeichnung, in welcher lediglich eine bevorzugte Ausführungsform beispielhaft dargestellt ist, näher beschrieben. Dabei zeigt:

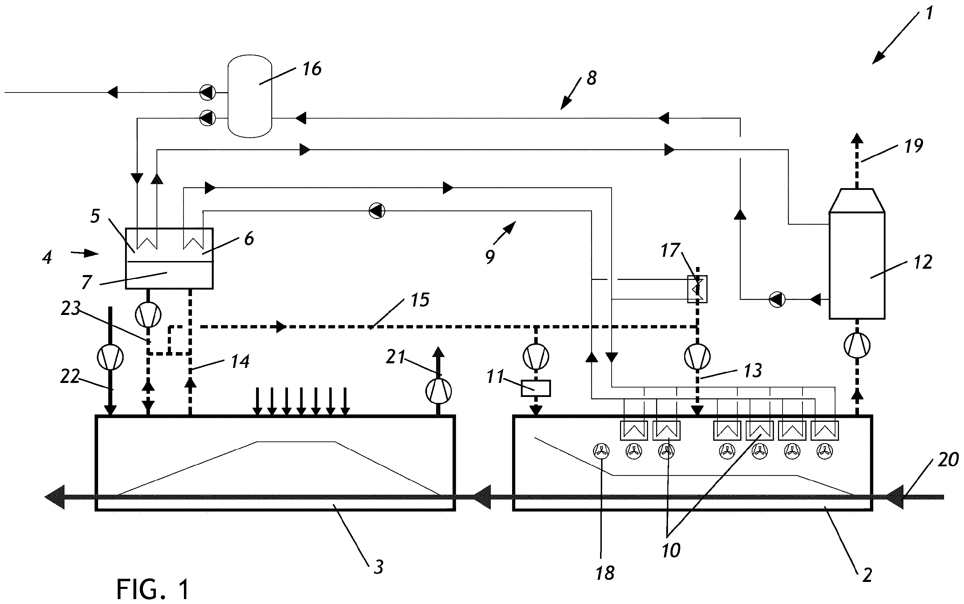

Fig. 1 eine schematische Darstellung einer bevorzugten Ausführungsform einer Anlage zum Brennen von keramischen Warenrohlingen.

Die Fig. 1 zeigt zumindest Teile einer bevorzugten Ausführungsform einer Anlage 1 zum Brennen von keramischen Warenrohlingen, umfassend einen Trockner 2 zum Trocknen der Warenrohlinge und einen Ofen 3 zum Brennen getrockneter Warenrohlinge, wobei die Anlage 1 eine Absorptionswärmepumpe 4 mit einem Verdampfer 5, einem Kondensator 6 und einem Austreiber 7 aufweist, dass der Verdampfer 5 und ein Abluftsystem des Trockners 2 thermisch gekoppelt sind, dass der Kondensator 6 und eine Wärmeeinspeisung des Trockners 2 thermisch gekoppelt sind und dass der Austreiber 7 und der Ofen 3 thermisch gekoppelt sind.

Dadurch ergibt sich der Vorteil, dass Wärmeenergie aus einem Abluftsystem des Trockners 2 mittels einer Absorptionswärmepumpe 4 dem Trockner 2 zugeführt und wiederverwertet werden kann. Weiters ist vorteilhaft, dass Abwärme aus dem Ofen 3, insbesondere erhitzte Abkühlungsluft, dem Austreiber 7 der Absorptionswärmepumpe 4 zugeführt wird und der Austreiber 7 durch diese Wärme betrieben wird. Somit wird die Wärmeenergie aus dem Abluftsystem des Trockners 2 effizient zurück gewonnen. Weiters ist vorteilhaft, dass die Temperatur und die Feuchtigkeit in dem Trockner 2 unabhängig voneinander gesteuert werden kann, wodurch eine bessere Regelung der Trocknung der Warenrohlinge ermöglicht und die Effizienz des Verfahrens weiter gesteigert wird. Durch die Wiederverwertung der Wärmeenergie aus dem Abluftsystem und der Abwärme aus dem Ofen 3 wird der Brennstoffbedarf zum Aufheizen des Trockners 2 stark reduziert, woraus eine geringere CO2-Emission der Anlage 1 resultiert und die Anlage 1 somit umweltfreundlicher ist.

Weiters ist ein Verfahren zum Betreiben einer Anlage 1 zum Brennen von keramischen Warenrohlingen umfassend den Trockner 2, den Ofen 3 und die Absorptionswärmepumpe 4 mit dem Verdampfer 5, dem Kondensator 6 und dem Austreiber 7 vorgesehen, wobei in dem Trockner 2 Warenrohlinge getrocknet werden und in dem Ofen 3 getrocknete Warenrohlinge gebrannt werden, wobei dem Verdampfer 5 Wärmeenergie aus dem Abluftsystem des Trockners 2 zugeführt wird, wobei dem Trockner 2 Wärmeenergie aus dem Kondensator 6 zugeführt wird, und wobei dem Austreiber 7 Abwärme aus dem Ofen 3 zugeführt wird.

Der Begriff keramische Warenrohlinge umfasst insbesondere noch nicht getrocknetes oder gebranntes Irdengut wie beispielsweise Baukeramik oder feuerfeste Keramik, Sinterzeug wie beispielsweise Steinzeug oder Porzellan und keramische Sondermassen wie beispielsweise Elektrokeramik.

Die keramischen Warenrohlinge können insbesondere noch nicht getrocknete und noch nicht gebrannte Mauerziegel, Dachziegel, Bodenfliesen oder Wandfliesen sein.

Thermisch gekoppelt bedeutet, dass Bauteile, Kreisläufe oder wenigstens ein Bauteil und ein Kreislauf derart verbunden sind, dass Wärme bzw. Wärmeenergie von einem Bauteil auf ein oder mehrere andere Bauteile, von einem Kreislauf auf einen oder mehrere andere Kreisläufe, von einem Bauteil auf einen Kreislauf oder von einem Kreislauf auf ein Bauteil übertragen bzw. zugeführt werden kann. Die thermische Kopplung kann insbesondere mittels Wärmeübertragungsvorrichtungen oder Wärmepumpen erfolgen. Die thermische Kopplung kann direkt oder indirekt über Zwischenkreisläufe erfolgen. Bei einer thermischen Kopplung des Ofens 3 mit dem Austreiber 7 kann demnach Wärme von dem Ofen 3 auf den Austreiber 7 und/oder Wärme von dem Austreiber 7 auf den Ofen 3 übertragen werden. Bei der gegenständlichen Ausführung der Erfindung wird insbesondere Wärme von dem Ofen 3 auf den Austreiber 7 übertragen.

Bei der Herstellung der keramischen Waren benötigen diese einen bestimmten Feuchtigkeitsgehalt, um einfach geformt werden zu können. Der Feuchtigkeitsgehalt der keramischen Warenrohlinge kann insbesondere 20% bis 30% betragen. Besonders bevorzugt kann der Feuchtigkeitsgehalt der Warenrohlinge 25% betragen.

Der Feuchtigkeitsgehalt ist insbesondere der Wassergehalt.

Vor dem Brennen muss jedoch dieser Feuchtigkeitsgehalt reduziert werden, da sonst bei abruptem Erhitzen der feuchten Warenrohlinge eine Rissbildung in den Warenrohlingen erfolgen kann. Mittels des Trockners 2 können die Warenrohlinge bei einem kontrollierten Temperatur-Luftfeuchteverhältnis schonend erwärmt werden und in den Warenrohlingen befindlicher Feuchtigkeit wird ausreichend Zeit gegeben, um aus den Warenrohlingen zu diffundieren, wodurch eine mögliche Rissbildung reduziert wird. Ausreichend getrocknete Warenrohlinge können im Ofen 3 gebrannt werden, wodurch einerseits das äußere Erscheinungsbild der Warenrohlinge geändert und andererseits die gewünschten physikalischen und chemischen Eigenschaften der Warenrohlinge eingestellt werden.

Der Trockner 2 kann ein Kammertrockner oder bevorzugter Weise ein Tunneltrockner sein. Der Ofen 3 kann ein Kammerofen oder bevorzugter Weise ein Tunnelofen sein.

Das Abluftsystem des Trockners 2 umfasst insbesondere eine Abluftleitung, mittels welcher die feuchte erwärmte Abluft aus dem Trockner 2 abgeführt werden kann. Die Abluft aus dem Trockner 2 hat insbesondere eine Temperatur von 30°C bis 60°C, bevorzugt mit einer relativen Luftfeuchtigkeit von 60% bis 95%, insbesondere im Wesentlichen 80%.

Warenrohlinge können insbesondere auf Transportwagen durch den Tunneltrockner und durch den Tunnelofen bewegt und getrocknet werden. Es werden bevorzugt mehrere Warenrohlinge auf jedem Transportwagen transportiert. Die Transportwagen müssen nicht ständig in Bewegung sein, sie können auch ein Zeitintervall lang an einem Ort verweilen. In Fig. 1 ist die Transportrichtung 20 beispielhaft gezeigt.

Die Trocknung der Warenrohlinge und das Brennen bereits getrockneter Warenrohlinge erfolgt insbesondere gleichzeitig, womit eine gleichzeitige Bestückung des Trockners 2 und des Ofens 3 mit Wahrenrohlingen möglich ist.

Die getrockneten Warenrohlinge können insbesondere einen Feuchtigkeitsgehalt von 1,5% bis 4% aufweisen. Bevorzugt weisen die getrockneten Warenrohlinge einen Feuchtigkeitsgehalt von 2% auf.

Die Absorptionswärmepumpe 4 weist insbesondere einen Verdampfer 5, einen Kondensator 6, einen Absorber und einen Austreiber 7 auf. Der Verdampfer 5 verdampft ein Kältemittel mittels Wärmeenergie aus dem Abluftsystem des Trockners 2. Hierbei nimmt das Kältemittel Wärmeenergie des Abluftsystems auf und wechselt seinen Aggregatzustand von flüssig zu gasförmig. Anschließend strömt der Kältemitteldampf in den Absorber und wird von einem Sorptionsmittel, insbesondere einer Flüssigkeit, absorbiert. Der Absorber ist in Fig. 1 nicht abgebildet. Wenn das Sorptionsmittel gesättigt ist, wird es zu dem Austreiber 7 befördert. Der Austreiber 7 treibt das absorbierte Kältemittel aus dem gesättigten Sorptionsmittel aus, indem das gesättigte Sorptionsmittel erhitzt wird. Die benötigte Wärmeenergie zum Erhitzen des gesättigten Sorptionsmittels erhält der Austreiber 7 aus der Abwärme des Ofens 3. Das Kältemittel verdampft hierbei und strömt zu dem Kondensator 6, wo es sich abkühlt und verflüssigt wird. Bei der Verflüssigung des Kältemittels entsteht Kondensationswärme, welche von dem Kondensator 6 zu dem Trockner 2 geführt wird.

Es kann besonders bevorzugt vorgesehen sein, dass der Verdampfer 5 und das Abluftsystem des Trockners 2 mittels eines Verdampferkreislaufes 8 thermisch gekoppelt sind. Hierbei kann insbesondere vorgesehen sein, dass dem Abluftsystem des Trockners 2 mittels des Verdampferkreislaufes 8 Wärmeenergie entzogen und dem Verdampfer 5 zugeführt wird. Vorteilhaft ist hierbei, dass mittels des Verdampferkreislaufes 8 eine besonders einfache Steuerung ermöglicht wird.

Der Verdampferkreislauf 8 ist insbesondere ein Zwischenkreislauf, welcher den Trockner 2 mit dem Abluftsystem des Verdampfers 5 thermisch koppelt und die Aufgabe hat, Wärmeenergie von dem Abluftysystem des Trockners 2 zu dem Verdampfer 5 zu transportieren.

Es kann weiters besonders bevorzugt vorgesehen sein, dass der Verdampferkreislauf 8 einen in dem Abluftsystem angeordneten Direktkontaktwärmetauscher 12 umfasst. Mittels des Direktkontaktwärmetauschers 12 kann Arbeitsmittel, insbesondere Wasser, aus der feuchten Abluft des Trockners 2 entzogen und wiederverwertet werden, wodurch Arbeitsmittel gespart wird.

Hierbei kann insbesondere vorgesehen sein, dass dem Abluftsystem des Trockners 2 mittels des Verdampferkreislaufes 8 Kondensationswärme entzogen wird. Vorteilhaft ist hierbei, dass Arbeitsmittel, insbesondere Wasser, aus dem Abluftsystem des Trockners 2, insbesondere aus der feuchten Abluft des Trockners 2, wiederverwertet wird, wodurch der Arbeitsmittel- bzw. Wasserverbrauch sinkt. Weiters wird der feuchten Abluft Kondensationswärme entzogen, welche Wärmeenergie mittels der Absorptionswärmepumpe 4 wiederverwertet werden kann.

Der Direktkontaktwärmetauscher 12 kann insbesondere ein umgekehrt betriebener Kühlturm sein, wobei ein Arbeitsmittel, insbesondere Wasser, durch die heiße Abluft des Trockners 2 erwärmt wird. Arbeitsmitteldampf, insbesondere Wasserdampf, kondensiert in dem Direktkontaktwärmetauscher 12 und gibt dabei die Wärmeenergie aus dem heißen Dampf bzw. der Luft an das Arbeitsmittel ab. Hierbei wird der erwärmten feuchten Luft Kondensationswärme entzogen. Es kann hierzu bevorzugt vorgesehen sein, dass der Kühlturm einen Auslass 19 für feuchte bzw. mit dem Arbeitsmittel gesättigte Luft aufweist, welche eine niedrigere Temperatur als die zugeführte erwärmte Luft aufweist.

Besonders bevorzugt kann vorgesehen sein, dass der Verdampferkreislauf 8 einen Puffertank 16 umfasst. Erwärmtes Arbeitsmittel, insbesondere Wasser, wird von dem Direktkontaktwärmetauscher 12 dem Puffertank 16 zugeführt, insbesondere gepumpt. In dem Puffertank 16 wird das erwärmte Arbeitsmittel gesammelt und dem Verdampfer 5 zugeführt. Vorteilhaft ist hierbei, dass Wärmeenergie dem Verdampfer 5 gezielt zugeführt werden kann, wodurch eine einfache prozesstechnische Steuerung ermöglicht wird.

Bevorzugt kann Arbeitsmittel, insbesondere ein Kondensat, aus dem Puffertank 16 in eine Warenrohlingsherstellungsanlage geleitet und zur Herstellung weiterer Warenrohlinge wiederverwendet werden, wodurch Arbeitsmittel gespart werden kann.

Es kann bevorzugt vorgesehen sein, dass von dem Verdampfer 5 abgekühltes Arbeitsmittel in den Direktkontaktwärmetauscher 12 rückgeführt wird, wo es wieder durch die heiße Abluft des Trockners 2 erwärmt wird, wodurch der Arbeitsmittelverbrauch niedrig gehalten werden kann.

Der Verdampferkreislauf 8 kann insbesondere ein offener Kreislauf sein.

Alternativ kann vorgesehen sein, dass der Verdampferkreislauf 8 einen in dem Abluftsystem angeordneten Rekuperator umfasst. In diesem Fall wird im Wesentlichen lediglich sensible Wärme aus dem Abluftsystem an den Verdampferkreislauf 8 übertragen.

Bevorzugt kann vorgesehen sein, dass der Kondensator 6 und eine Wärmeeinspeisung des Trockners 2 mittels eines Kondensatorkreislaufes 9 thermisch gekoppelt sind. Hierbei kann insbesondere vorgesehen sein, dass dem Trockner 2 mittels des Kondensatorkreislaufes 9 Wärmeenergie aus dem Kondensator 6 zugeführt wird. Dadurch wird die zuvor über den Verdampferkreislauf 8 zu der Absorptionswärmepumpe 4 aus dem Abluftsystem des Trockners 2 zugeführte Wärmeenergie effizient wiederverwertet.

Der Kondensatorkreislauf 9 ist insbesondere ein Zwischenkreislauf, welcher den Kondensator 6 und eine Wärmeeinspeisung des Trockners 2 thermisch koppelt und die Aufgabe hat, Wärmeenergie von dem Kondensator 6 zu der Wärmeeinspeisung des Trockners 2 zu transportieren.

Es kann insbesondere vorgesehen sein, dass die Temperatur im Kondensator 6 höher ist als die Temperatur im Verdampfer 5.

Es kann hierzu bevorzugt vorgesehen sein, dass ein Arbeitsmittel an einem Eingang des Verdampfers 5 eine niedrigere Temperatur hat als an einem Ausgang des Kondensators 6.

Die Temperatur an dem Kondensator 6 kann insbesondere 80°C bis 120°C, bevorzugt 90°C bis 100°C, betragen.

Besonders bevorzugt kann vorgesehen sein, dass der Kondensatorkreislauf 9 eine Wärmeübertragungseinrichtung 17 umfasst, welche Wärmeübertragungsvorrichtung 17 die von dem Kondensator 6 bereitgestellte Wärmeenergie dem Trockner 2, insbesondere der Zuluft des Trockners 2, zuführt. Diese Wärmeübertragungseinrichtung 17 kann insbesondere ein Wärmetauscher oder eine Wärmepumpe sein. In Fällen, bei denen mehr als 100°C in dem Trockner zur Trocknung der Warenrohlinge benötigt werden, kann vorgesehen sein, dass die Wärmeübertragungseinrichtung 17 eine Kompressionswärmepumpe ist.

Besonders bevorzugt kann vorgesehen sein, dass der Kondensatorkreislauf 9 zumindest eine in dem Trockner 2 angeordnete Wärmeübertragungsvorrichtung 10 zur Erwärmung der Luft in dem Trockner 2 umfasst. Hierbei kann insbesondere vorgesehen sein, dass Wärmeenergie aus dem Kondensator 6 der zumindest einen in dem Trockner 2 angeordneten Wärmeübertragungsvorrichtung 10 zur Erwärmung der Luft im Trockner 2 zugeführt wird, was sich energetisch besonders günstig auswirkt.

Die wenigstens eine Wärmeübertragungsvorrichtung 10 kann ein Wärmetauscher, insbesondere ein Rekuperator, sein, wodurch sich besonders einfach Wärmeenergie in den Trockner 2 einspeisen lassen kann.

Bevorzugt kann weiters vorgesehen sein, dass der Kondensatorkreislauf 9 mit einer Zuluftleitung 13 des Trockners 2 thermisch gekoppelt ist. Hierbei kann insbesondere vorgesehen sein, dass Wärmeenergie aus dem Kondensator 6 einer Zuluft des Trockners 2 zugeführt wird. Dadurch wird die Zuluft erwärmt und die Wärmeenergie kann besonders einfach dem Trockner 2 zugeführt werden.

Es kann vorgesehen sein, dass der Trockner 2, insbesondere der Tunneltrockner, mehrere Trocknungszonen aufweist, wobei in den Trocknungszonen unterschiedliche Temperatur und/oder Luftfeuchtigkeitsverhältnisse vorherrschen. Es kann diesbezüglich vorgesehen sein, dass in einem Anfangsbereich des Trockners 2 die Luft eine niedrigere Temperatur aufweist als in einem Endbereich des Trockners 2. Es kann diesbezüglich vorgesehen sein, dass ein stetig steigender Temperaturverlauf von einem Anfangsbereich zu einem Endbereich des Trockners 2 vorhanden ist.

Die Trocknung der Warenrohlinge kann insbesondere in einem Temperaturbereich von 10°C bis 120°C, bevorzugt in einem Temperaturbereich von 20°C bis 80°C, erfolgen. Der Temperaturbereich umfasst hierbei die Temperatur aller Trocknungszonen.

Es kann besonders bevorzugt vorgesehen sein, dass in mehreren Trocknungszonen wenigstens eine Wärmeübertragungsvorrichtung angeordnet ist. Bevorzugt ist die wenigstens eine Wärmeübertragungsvorrichtung 10 ein Wärmetauscher, insbesondere ein Rekuperator, wodurch die Wärmeeinspeisung für jede Trocknungszone einfach geregelt werden kann.

Besonders bevorzugt sind die Wärmeübertragungsvorrichtungen 10 parallel geschaltet, wodurch die jeweiligen Wärmeübertragungsvorrichtungen 10 einzeln ansteuerbar sind und eine gezielte Regelung der Temperatur in den jeweiligen Trocknungszonen erfolgen kann. Hierdurch kann beispielsweise in Zonen mit höherer Temperatur mehr Wärmeenergie eingespeist werden als in Zonen mit niedrigerer Temperatur.

Bevorzugt kann vorgesehen sein, dass wenigstens eine weitere Wärmequelle 11 zumindest mittelbar mit dem Trockner 2 thermisch gekoppelt ist. Hierbei kann insbesondere vorgesehen sein, dass der Luft im Trockner 2 Wärmeenergie mittels wenigstens einer weiteren Wärmequelle 11 zugeführt wird. Dadurch kann bei Bedarf auf einfache Weise die Temperatur in beispielsweise einer Trocknungszone an dem Endbereich des Trockners 2 zusätzlich erhöht werden. Die weitere Wärmequelle 11 kann insbesondere ein Gasbrenner sein.

Um die Effizienz der Trocknung der Warenrohlinge weiter zu begünstigen, kann bevorzugt vorgesehen sein, dass in dem Trockner 2 Ventilatoren 18 angeordnet sind, wodurch die Luftzirkulation um die Warenrohlinge herum und die Beförderung der erwärmten feuchten Luft zu dem Abluftsystem des Trockners 2 begünstigt wird.

Es kann bevorzugt vorgesehen sein, dass der Kondensatorkreislauf 9 ein geschlossener Kreislauf ist. Hierbei kann vorgesehen sein, dass von den Wärmeübertragungsvorrichtungen 10 abgekühltes Arbeitsmittel, insbesondere Wasser, zu dem Kondensator 6 der Absorptionswärmepumpe 4 geleitet wird, wo es von dem Kondensator 6 wieder erhitzt wird. Hierdurch kann auf einfache und effiziente Weise Arbeitsmittel gespart werden.

Die getrockneten Warenrohlinge werden in dem Ofen 3, insbesondere Tunnelofen, bevorzugt bei Temperaturen zwischen 750°C und 1250°C, insbesondere 900°C und 1100°C, gebrannt. Insbesondere können mittels dieser Temperaturen die gewünschten physikalisch chemischen Eigenschaften der Warenrohlinge bzw. der keramischen Waren eingestellt werden.

Der Ofen 3 wird mittels der Verbrennung eines Brennstoffes, insbesondere mittels der Verbrennung von Gas, beheizt. Die dabei entstehenden Abgase können insbesondere über einen Rauchfang 21 aus dem Inneren des Ofens 3 abgeleitet werden und weisen insbesondere eine niedrige Temperatur von 120°C bis 170°C auf.

In dem bevorzugten Falle eines Tunnelofens weisen die Vorheizzone, die Heizungszone und die Abkühlungszone jeweils eine Länge von 20m bis 80m, insbesondere 25m bis 75m, auf.

Ein bevorzugter Temperaturbereich in der Vorheizzone kann beispielsweise zwischen 500°C und 700°C sein.

Bevorzugt kann vorgesehen sein, dass in die Abkühlungszone des Ofens 3 Abkühlungsluft zum Abkühlen der Warenrohlinge eingeleitet wird. Hierzu kann der Ofen 3 eine Abkühlungszuluftleitung 22 aufweisen.

In der Abkühlungszone werden die gebrannten keramischen Waren vorzugsweise auf 50°C bis 100°C abgekühlt, bevor sie den Ofen 3 verlassen.

Um eine besonders einfache thermische Kopplung des Austreibers 7 mit dem Ofen 3 herzustellen, kann besonders bevorzugt vorgesehen sein, dass der Austreiber 7 und der Ofen 3 mittels einer Austreiber-Abluftleitung 14 thermisch gekoppelt sind. Hierbei kann insbesondere vorgesehen sein, dass dem Austreiber 7 erhitzte Luft aus dem Ofen 3 zugeführt wird. Dadurch kann der Austreiber 7 auf einfache Weise mit Abwärme aus dem Ofen 3 betrieben werden und keine weitere Wärmequelle zum Betreiben des Austreibers 7 benötigt wird.

Alternativ kann bevorzugt vorgesehen sein, dass der Austreiber 7 und der Ofen 3 einen geschlossenen Kreislauf ausbilden, was sich energetisch besonders günstig auswirkt.

Es kann diesbezüglich vorgesehen sein, dass nachdem die erhitzte Luft aus dem Ofen 3 ihre Wärmeenergie dem Austreiber 7 zugeführt hat und abkühlt, dass diese abgekühlte Luft dem Abkühlbereich des Ofens 3 mittels einer Abkühlungsluftrückführleitung 23 zugeführt wird.

Bevorzugt kann vorgesehen sein, dass der Ofen 3 und der Trockner 2 mittels einer Heiz-Abluftleitung 15 thermisch gekoppelt sind. Hierbei kann insbesondere vorgesehen sein, dass dem Trockner 2 erhitzte Luft aus dem Ofen 3 zugeführt wird. Die erhitzte Luft kann insbesondere eine Temperatur von 100°C bis 200°C haben. Die erhitzte Luft kann dem Trockner 2 zusätzlich zu der Wärmeenergie aus dem Kondensatorkreislauf 9 zugeführt werden. Weiters weist die erhitzte Luft eine Restfeuchtigkeit von den getrockneten Wahrenrohlingen auf, welche beim Brennvorgang den Wahrenrohlingen entzogen wurde. Somit kann insbesondere erhitzte feuchte Luft in den Trockner 2 zugeführt werden, wodurch wiederum Arbeitsmittel gespart werden kann.

Alternativ kann vorgesehen sein, dass die Austreiber-Abluftleitung 14 und die Heiz-Abluftleitung 15 als Abzweigungsleitung vorliegen. Das heißt, dass ein Teil der erwärmten Abluft dem Austreiber 7 und dem Trockner 2 gleichzeitig mittels einer Leitung zugeführt werden kann.

Durch die Wiederverwertung der Abwärme aus dem Ofen 3 und der Wärmeenergie aus dem Abluftsystem des Trockners 2 kann die Anlage 1 besonders flexibel, energieeffizient und umweltfreundlich betrieben werden. Hierdurch kann die CO₂-Emission der Anlage 1 gesenkt werden, da weniger fossile Brennstoffe verbrannt werden müssen.

Besonders bevorzugt kann vorgesehen sein, dass die Wärmezufuhr für den Trockner 2 durch eine Kombination von Wärmeenergie von der Absorptionswärmepumpe 4, Wärmeenergie über Abwärme des Ofens 3 über die Heiz-Abluftleitung 15 sowie erzeugter Wärmeenergie aus der zusätzlichen Wärmequelle 11 erfolgt. Eine derartige Anlage 1 kann auch als Hybridtrocknungssystem bezeichnet werden, da die Abwärme des Ofens 3, die Wärmeenergie aus der Abluft des Trockners 2 und optional eine zusätzliche Wärmequelle 11 verwendet werden können, um den Trockner 2 zu betreiben bzw. die Warenrohlinge im Trockner 2 zu trocknen. Dadurch ist eine besonders gute und unabhängige Kontrolle der Temperatur und Luftfeuchtigkeit im Trockner 2 möglich. Weiters kann durch eine Regelung der einzelnen Wärmezufuhren für den Trockner 2 der Kohlendioxidausstoß der Anlage 1 minimiert werden.

## Patentansprüche

1. Verfahren zum Betreiben einer Anlage (1) zum Brennen von keramischen Warenrohlingen umfassend einen Trockner (2) und einen Ofen (3), wobei in dem Trockner (2) Warenrohlinge getrocknet werden und in dem Ofen (3) getrocknete Warenrohlinge gebrannt werden, **dadurch gekennzeichnet, dass** die Anlage (1) eine Absorptionswärmepumpe (4) mit einem Verdampfer (5), einem Kondensator (6) und einem Austreiber (7) aufweist, dass dem Verdampfer (5) Wärmeenergie aus einem Abluftsystem des Trockners (2) zugeführt wird, dass dem Trockner (2) Wärmeenergie aus dem Kondensator (6) zugeführt wird, und dass dem Austreiber (7) Abwärme aus dem Ofen (3) zugeführt wird.

2. Verfahren nach Anspruch 1, **dadurch gekennzeichnet, dass** dem Abluftsystem des Trockners (2) mittels eines Verdampferkreislaufes (8) Wärmeenergie entzogen und dem Verdampfer (5) zugeführt wird.

3. Verfahren nach Anspruch 2, **dadurch gekennzeichnet, dass** dem Abluftsystem des Trockners (2) mittels des Verdampferkreislaufes (8) Kondensationswärme entzogen wird.

4. Verfahren nach einem der Ansprüche 1 bis 3, **dadurch gekennzeichnet, dass** dem Trockner (2) mittels eines Kondensatorkreislaufes (9) Wärmeenergie aus dem Kondensator (6) zugeführt wird.

5. Verfahren nach einem der Ansprüche 1 bis 4, **dadurch gekennzeichnet, dass** Wärmeenergie aus dem Kondensator (6) einer Zuluft des Trockners (2) zugeführt wird.

6. Verfahren nach einem der Ansprüche 1 bis 5, **dadurch gekennzeichnet, dass** Wärmeenergie aus dem Kondensator (6) zumindest einer in dem Trockner (2) angeordneten Wärmeübertragungsvorrichtung (10) zur Erwärmung der Luft im Trockner (2) zugeführt wird.

7. Verfahren nach einem der Ansprüche 1 bis 6, **dadurch gekennzeichnet, dass** der Luft im Trockner (2) Wärmeenergie mittels wenigstens einer weiteren Wärmequelle (11) zugeführt wird.

8. Verfahren nach einem der Ansprüche 1 bis 7, **dadurch gekennzeichnet, dass** dem Austreiber (7) erhitzte Luft aus dem Ofen (3) zugeführt wird.

9. Verfahren nach einem der Ansprüche 1 bis 8, **dadurch gekennzeichnet, dass** dem Trockner (2) erhitzte Luft aus dem Ofen (3) zugeführt wird.

10. Anlage (1) zum Brennen von keramischen Warenrohlingen, umfassend einen Trockner (2) zum Trocknen der Warenrohlinge und einen Ofen (3) zum Brennen getrockneter Warenrohlinge, **dadurch gekennzeichnet, dass** die Anlage (1) eine Absorptionswärmepumpe (4) mit einem Verdampfer (5), einem Kondensator (6) und einem Austreiber (7) aufweist, dass der Verdampfer (5) und ein Abluftsystem des Trockners (2) thermisch gekoppelt sind, dass der Kondensator (6) und eine Wärmeeinspeisung des Trockners (2) thermisch gekoppelt sind und dass der Austreiber (7) und der Ofen (3) thermisch gekoppelt sind.

11. Anlage (1) nach Anspruch 10, **dadurch gekennzeichnet, dass** der Verdampfer (5) und das Abluftsystem des Trockners (2) mittels eines Verdampferkreislaufes (8) thermisch gekoppelt sind.

12. Anlage (1) nach Anspruch 11, **dadurch gekennzeichnet, dass** der Verdampferkreislauf (8) einen in dem Abluftsystem angeordneten Direktkontaktwärmetauscher (12) umfasst.

13. Anlage (1) nach einem der Ansprüche 10 bis 12, **dadurch gekennzeichnet, dass** der Kondensator (6) und eine Wärmeeinspeisung des Trockners (2) mittels eines Kondensatorkreislaufes (9) thermisch gekoppelt sind.

14. Anlage (1) nach Anspruch 13, **dadurch gekennzeichnet, dass** der Kondensatorkreislauf (9) mit einer Zuluftleitung (13) des Trockners (2) thermisch gekoppelt ist.

15. Anlage (1) nach Anspruch 13, **dadurch gekennzeichnet, dass** der Kondensatorkreislauf (9) zumindest eine in dem Trockner (2) angeordnete Wärmeübertragungsvorrichtung (10) zur Erwärmung der Luft im Trockner (2) umfasst.

16. Anlage (1) nach einem der Ansprüche 10 bis 15, **dadurch gekennzeichnet, dass** wenigstens eine weitere Wärmequelle (11) zumindest mittelbar mit dem Trockner (2) thermisch gekoppelt ist.

17. Anlage (1) nach einem der Ansprüche 10 bis 16, **dadurch gekennzeichnet, dass** der Austreiber (7) und der Ofen (3) mittels einer Austreiber-Abluftleitung (14) thermisch gekoppelt sind.

18. Anlage (1) nach einem der Ansprüche 10 bis 17, **dadurch gekennzeichnet, dass** der Ofen (3) und der Trockner (2) mittels einer Heiz-Abluftleitung (15) thermisch gekoppelt sind.

## Claims

1. Method for operating a plant (1) for firing ceramic product blanks, comprising a dryer (2) and a kiln (3), wherein product blanks are dried in the dryer (2) and dried product blanks are fired in the kiln (3), **characterized in that** the plant (1) has an absorption heat pump (4) with an evaporator (5), a condenser (6) and an expeller (7), **in that** the evaporator (5) is supplied with heat energy from an exhaust air system of the dryer (2), **in that** the dryer (2) is supplied with heat energy from the condenser (6), and **in that** the expeller (7) is supplied with waste heat from the kiln (3).

2. Method according to claim 1, **characterized in that** heat energy is extracted from the exhaust air system of the dryer (2) by means of an evaporator circuit (8) and supplied to the evaporator (5).

3. Method according to claim 2, **characterized in that** condensation heat is extracted from the exhaust air system of the dryer (2) by means of the evaporator circuit (8).

4. Method according to one of claims 1 to 3, **characterized in that** heat energy from the condenser (6) is supplied to the dryer (2) by means of a condenser circuit (9).

5. Method according to one of claims 1 to 4, **characterized in that** thermal energy from the condenser (6) is supplied to a supply air of the dryer (2).

6. Method according to one of claims 1 to 5, **characterized in that** heat energy from the condenser (6) is supplied to at least one heat transfer device (10) arranged in the dryer (2) for heating the air in the dryer (2).

7. Method according to one of claims 1 to 6, **characterized in that** heat energy is supplied to the air in the dryer (2) by means of at least one further heat source (11).

8. Method according to one of claims 1 to 7, **characterized in that** heated air from the kiln (3) is supplied to the expeller.

9. Method according to one of claims 1 to 8, **characterized in that** heated air from the kiln (3) is supplied to the dryer (2).

10. Plant (1) for firing ceramic product blanks, comprising a dryer (2) for drying the product blanks and a kiln (3) for firing dried product blanks, **characterized in that** the plant (1) comprises an absorption heat pump (4) with an evaporator (5), a condenser (6) and an expeller (7), **in that** the evaporator (5) and an exhaust air system of the dryer (2) are thermally coupled, **in that** the condenser (6) and a heat feed of the dryer (2) are thermally coupled, and **in that** the expeller (7) and the kiln (3) are thermally coupled.

11. Plant (1) according to claim 10, **characterized in that** the evaporator (5) and the exhaust system of the dryer (2) are thermally coupled by means of an evaporator circuit (8).

12. Plant (1) according to claim 11, **characterized in that** the evaporator circuit (8) comprises a direct contact heat exchanger (12) arranged in the exhaust air system.

13. Plant (1) according to one of claims 10 to 12, **characterized in that** the condenser (6) and a heat feed of the dryer (2) are thermally coupled by means of a condenser circuit (9).

14. Plant (1) according to claim 13, **characterized in that** the condenser circuit (9) is thermally coupled to a supply air line (13) of the dryer (2).

15. Plant (1) according to claim 13, **characterized in that** the condenser circuit (9) comprises at least one heat transfer device (10) arranged in the dryer (2) for heating the air in the dryer (2).

16. Plant (1) according to one of claims 10 to 15, **characterized in that** at least one further heat source (11) is at least indirectly thermally coupled to the dryer (2).

17. Plant (1) according to one of claims 10 to 16, **characterized in that** the expeller (7) and the kiln (3) are thermally coupled by means of an expeller exhaust air line (14).

18. Plant (1) according to one of claims 10 to 17, **characterized in that** the kiln (3) and the dryer (2) are thermally coupled by means of a heating exhaust air line (15).

## Revendications

1. Procédé pour la conduite d'une installation (1) pour la cuisson de semi-produits en céramique comprenant un séchoir (2) et un four (3), dans lequel des semi-produits sont séchés dans le séchoir (2) et des semi-produits séchés sont cuits dans le four (3), **caractérisé en ce que** l'installation (1) comporte une pompe à chaleur à absorption (4) munie d'un évaporateur (5), d'un condenseur (6) et d'un éjecteur (7), **en ce que** de l'énergie thermique est amenée à l'évaporateur (5) à partir d'un système de sortie d'air du séchoir (2), **en ce que** de l'énergie thermique est amenée au séchoir (2) à partir du condenseur (6) et **en ce que** de la chaleur sortant du four (3) est amenée à l'éjecteur (7).

2. Procédé selon la revendication 1, **caractérisé en ce que** de l'énergie thermique est prélevée sur le système de sortie d'air du séchoir (2) au moyen d'un circuit d'évaporateur (8) et amenée à l'évaporateur (5).

3. Procédé selon la revendication 2, **caractérisé en ce que** de la chaleur de condensation est prélevée sur le système de sortie d'air du séchoir (2) au moyen du circuit d'évaporateur (8).

4. Procédé selon l'une des revendications 1 à 3, **caractérisé en ce que** de l'énergie thermique est amenée du condenseur (6) au séchoir (2) au moyen d'un circuit de condenseur (9).

5. Procédé selon l'une des revendications 1 à 4, **caractérisé en ce que** de l'énergie thermique est amenée du condenseur (6) à une entrée d'air du séchoir (2).

6. Procédé selon l'une des revendications 1 à 5, **caractérisé en ce que** de l'énergie thermique est amenée du condenseur (6) à au moins un dispositif de transfert de chaleur (10) disposé dans le séchoir (2) pour chauffer l'air dans le séchoir (2).

7. Procédé selon l'une des revendications 1 à 6, **caractérisé en ce que** de l'énergie thermique est amenée à l'air contenu dans le séchoir (2) au moyen d'au moins une autre source de chaleur (11).

8. Procédé selon l'une des revendications 1 à 7, **caractérisé en ce que** de l'air chauffé est amené du four (3) à l'éjecteur (7).

9. Procédé selon l'une des revendications 1 à 8, **caractérisé en ce que** de l'air chauffé est amené du four (3) au séchoir (2).

10. Installation (1) pour la cuisson de semi-produits en céramique comprenant un séchoir (2) pour le séchage des semi-produits et un four (3) pour la cuisson de semi-produits séchés, **caractérisée en ce que** l'installation (1) comporte une pompe à chaleur à absorption (4) munie d'un évaporateur (5), d'un condenseur (6) et d'un éjecteur (7), **en ce que** l'évaporateur (5) et un système de sortie d'air du séchoir (2) sont couplés du point de vue thermique, **en ce que** le condenseur (6) et une alimentation en chaleur du séchoir (2) sont couplés du point de vue thermique et **en ce que** l'éjecteur (7) et le four (3) sont couplés du point de vue thermique.

11. Installation (1) selon la revendication 10, **caractérisée en ce que** l'évaporateur (5) et le système de sortie d'air du séchoir (2) sont couplés du point de vue thermique au moyen d'un circuit d'évaporateur (8).

12. Installation (1) selon la revendication 11, **caractérisée en ce que** le circuit d'évaporateur (8) comprend un échangeur de chaleur à contact direct (12) disposé dans le système de sortie d'air.

13. Installation (1) selon l'une des revendications 10 à 12, **caractérisée en ce que** le condenseur (6) et une alimentation en chaleur du séchoir (2) sont couplés du point de vue thermique au moyen d'un circuit de condenseur (9).

14. Installation (1) selon la revendication 13, **caractérisée en ce que** le circuit de condenseur (9) est couplé du point de vue thermique avec une conduite d'arrivée d'air (13) du séchoir (2).

15. Installation (1) selon la revendication 13, **caractérisée en ce que** le circuit de condenseur (9) comprend au moins un dispositif de transfert de chaleur (10) disposé dans le séchoir (2) pour chauffer l'air dans le séchoir (2).

16. Installation (1) selon l'une des revendications 10 à 15, **caractérisée en ce qu'**au moins une autre source de chaleur (11) est couplée au moins indirectement du point de vue thermique avec le séchoir (2).

17. Installation (1) selon l'une des revendications 10 à 16, **caractérisée en ce que** l'éjecteur (7) et le four (3) sont couplés du point de vue thermique au moyen d'une conduite de sortie d'air de l'éjecteur (14).

18. Installation (1) selon l'une des revendications 10 à 17, **caractérisée en ce que** le four (3) et le séchoir (2) sont couplés du point de vue thermique au moyen d'une conduite de sortie d'air de chauffage (15).
